# EUROPÄISCHE PATENTANMELDUNG

(11) **EP 3 756 792 A1**
(43) Veröffentlichungstag der Anmeldung: **30.12.2020**
(21) Anmeldenummer: 19183259.1
(22) Anmeldetag: 28.06.2019
(51) Int. Cl.: B22F 3/105, B29C 64/153, B33Y 10/00, B33Y 30/00, B33Y 40/00

(54) **VERFAHREN UND ANORDNUNG ZUM SEPARIEREN ÜBERSCHÜSSIGEN WERKSTOFFS VON EINEM ADDITIV HERGESTELLTEN BAUTEIL**

(71) Anmelder: Siemens Aktiengesellschaft, 80333 München (DE)
(72) Erfinder: Hartmann, Dirk, 85617 Aßling (DE); Paffrath, Meinhard, 85622 Feldkirchen (DE); Kiener, Christoph, 81369 München (DE)

(57) **Zusammenfassung**

Zum Separieren überschüssigen Werkstoffs (WS) von einem additiv hergestellten Bauteil (BT), werden räumlich aufgelöste Strukturdaten (CAD) des Bauteils (BT) empfangen. Anhand der Strukturdaten (CAD) wird ein Ausschüttvorgang von Werkstoff (WS) aus dem Bauteil (BT) simuliert, wobei eine Abfolge von Ausschüttposen (AP(1),...,AP(N)) des Bauteils (BT) ermittelt wird. Erfindungsgemäß wird für eine jeweilige Ausschüttpose (AP(K)):
- das Bauteil abhängig vom simulierten Ausschüttvorgang in die jeweilige Ausschüttpose (AP(K)) bewegt,
- eine Werkstoffbewegung sensorisch detektiert,
- infolge einer Detektion eines Abflauens der Werkstoffbewegung ein Auslösesignal (TR) generiert, und
- durch das Auslösesignal (TR) eine Bewegung des Bauteils (BT) in eine nachfolgende Ausschüttpose (AP(K+1)) veranlasst, wobei das Auslösesignal (TR) vorrangig vor dem simulierten Ausschüttvorgang berücksichtigt wird.

## Beschreibung

In zeitgemäßen Produktionsprozessen gewinnt die additive Fertigung zunehmend an Bedeutung. Sie erlaubt es, Produkte mit nahezu beliebig komplexen Umrissen und Topologien mit verhältnismäßig geringem Aufwand zu produzieren. Verglichen mit klassischen Fertigungsverfahren sind bei der additiven Fertigung nur wenige konstruktive Nebenbedingungen einzuhalten.

Eine bekannte additive Fertigungstechnologie ist das sogenannte Pulverbettverfahren, das insbesondere bei der Herstellung von metallischen Bauteilen Anwendung findet. Hierbei wird der Werkstoff für das herzustellende Bauteil in Form eines Pulverbetts, Fluidbetts bzw. Werkstoffbetts schichtweise bereitgestellt. Zur Herstellung des Bauteils werden dann die einzelnen Partikel des Werkstoffs Schicht für Schicht miteinander verbunden. Der Werkstoff kann hierbei ein Metall, ein Polymerpulver, ein anorganisches Material oder ein anderes pulverförmiges oder flüssiges Material sein. Die Verbindung der Werkstoffpartikel kann durch physikalische oder chemische Prozesse, durch Sintern, Verkleben, Aufschmelzen, Erstarren oder andere Verbindungsverfahren bewirkt werden. Bekannte Verfahren sind Laserschmelzen und Lasersintern sowie die Anwendung von UV-Strahlung zur Aushärtung flüssiger Werkstoffe.

Der nicht verbundene, d.h. überschüssige Werkstoff dient während des Fertigungsprozesses als eine passive Stützstruktur, so dass beispielsweise überhängende Geometrien realisiert werden können. Ähnliches gilt auch für Fluide oder fluidisierbare Materialien, wie z.B. durch UV-Strahlen aushärtbare Monomere. Nach Beendigung des Fertigungsprozesses füllt der nicht verbundene Werkstoff häufig das Bauteil komplett oder zumindest teilweise aus und muss nach Entnahme des Bauteils aus dem Werkstoffbett aus den Hohlräumen des finalen Bauteils entfernt werden.

Bisher erfolgt die Entfernung des überschüssigen Werkstoffs manuell oder durch maschinelles Rotieren oder Schütteln des Bauteils. Eine solche Vorgehensweise kann jedoch - insbesondere, wenn das Bauteil Hohlräume mit komplexer Geometrie aufweist - sehr langwierig sein.

Es ist Aufgabe der vorliegenden Erfindung, ein Verfahren und eine Anordnung zu schaffen, die eine effiziente Separierung überschüssigen Werkstoffs von einem additiv hergestellten Bauteil erlauben.

Gelöst wird diese Aufgabe durch ein Verfahren mit den Merkmalen des Patentanspruchs 1 sowie durch eine Anordnung mit den Merkmalen des Patentanspruchs 13.

Zum Separieren überschüssigen Werkstoffs von einem additiv hergestellten Bauteil, werden räumlich aufgelöste Strukturdaten des Bauteils empfangen. Anhand der Strukturdaten wird ein Ausschüttvorgang von Werkstoff aus dem Bauteil simuliert, wobei eine Abfolge von Ausschüttposen des Bauteils ermittelt wird. Erfindungsgemäß wird für eine jeweilige Ausschüttpose
- das Bauteil abhängig vom simulierten Ausschüttvorgang in die jeweilige Ausschüttpose bewegt,
- eine Werkstoffbewegung sensorisch detektiert,
- infolge einer Detektion eines Abflauens der Werkstoffbewegung ein Auslösesignal generiert, und
- durch das Auslösesignal eine Bewegung des Bauteils in eine nachfolgende Ausschüttpose veranlasst, wobei das Auslösesignal vorrangig vor dem simulierten Ausschüttvorgang berücksichtigt wird.

Durch die Simulation des Ausschüttvorgangs und eine darauf basierende Bewegung des Bauteils in vorteilhafte Ausschüttposen kann der überschüssige Werkstoff in der Regel sehr effektiv vom Bauteil separiert werden. Insbesondere können durch die vorrangige Auslösung einer Bewegung in eine nachfolgende Ausschüttpose Verzögerungen vermieden werden, die auf einer Überschätzung einer Ausschüttdauer durch die Simulation basieren. Es erweist sich, dass eine Entleerungsdauer für das Bauteil durch die Erfindung in vielen Fällen erheblich reduziert werden kann.

Vorteilhafte Ausführungsformen und Weiterbildungen der Erfindung sind in den abhängigen Ansprüchen angegeben.

Nach einer vorteilhaften Ausführungsform der Erfindung kann anhand der Strukturdaten ein Hohlraum des Bauteils ermittelt und in räumliche Bereiche eingeteilt werden. Für einen jeweiligen räumlichen Bereich kann dann eine Weglänge eines im Hohlraum verlaufenden Wegs zu einer Öffnung des Hohlraums sowie eine Schüttrichtung, in der sich diese Weglänge verkürzt, ermittelt und dem jeweiligen räumlichen Bereich zugeordnet werden. Aus den ermittelten Schüttrichtungen kann die Abfolge von Ausschüttposen abgeleitet werden. Die Schüttrichtung gibt für einen jeweiligen räumlichen Bereich eine Richtung an, in der der dort befindliche Werkstoff zu befördern oder zu schütten ist, um sich der Öffnung zu nähern. Vorzugsweise kann als Schüttrichtung lokal die Richtung eines negativen Gradienten der ortsabhängigen Weglänge ermittelt werden. Der negative Gradient gibt diejenige Richtung an, in der sich die Weglänge maximal verkürzt.

Zur Einteilung in räumliche Bereiche, kann ein virtuelles räumliches Gitter über das Bauteil oder den Hohlraum gelegt werden. Die räumlichen Bereiche werden dann durch die im Hohlraum des Bauteils befindlichen oder damit überlappenden Gitterzellen dieses virtuellen Gittes gebildet.

Vorzugsweise kann eine kürzeste Weglänge eines jeweiligen räumlichen Bereichs zur Öffnung mittels eines Fast-Marching-Verfahrens ermittelt werden. Zur Ausführung von Fast-Marching-Verfahren stehen eine Vielzahl von effizienten Standardroutinen zur Verfügung.

Gemäß einer weiteren vorteilhaften Ausführungsform kann der Hohlraum des Bauteils simulativ mit virtuellem Werkstoff gefüllt werden. Weiterhin kann ein räumlicher Bereich selektiert werden, der eine kürzere Weglänge zur Öffnung aufweist und/oder mit mehr virtuellem Werkstoff gefüllt ist als andere räumliche Bereiche. Hieraus kann eine dem selektierten räumlichen Bereich zugeordnete Schüttrichtung ermittelt werden, aus der dann eine Ausschüttpose abgeleitet wird. Die Ausschüttpose des Bauteils kann vorzugsweise so gewählt werden, dass die ermittelte Schüttrichtung in Schwerkraftrichtung nach unten weist.

Insbesondere kann im Rahmen der Simulation des Ausschüttvorgangs eine bewegungsbedingte Verteilung von virtuellem Werkstoff im Bauteil simuliert werden. Dies erlaubt in vielen Fällen eine genauere Simulation des Ausschüttvorgangs.

Weiterhin kann das Bauteil durch eine Bewegungsvorrichtung in unterschiedliche räumliche Ausrichtungen rotiert und/oder in mechanische Schwingungen versetzt werden. Eine Amplitude, Frequenz oder Schwingungsrichtung der Schwingung kann dabei vorzugsweise simulativ optimiert werden. Mechanische Schwingungen des Bauteils während des Ausschüttvorgangs begünstigen einen gleichverteilten und damit häufig besser simulierbaren Zustand des überschüssigen Werkstoffs im Bauteil. Zudem kann der Werkstoff durch die Schwingungen gewissermaßen aus dem Bauteil herausgeschüttelt werden.

Nach einer weiteren vorteilhaften Ausführungsform kann die Werkstoffbewegung mittels einer Waage detektiert werden, durch die aus dem Bauteil ausgeschütteter Werkstoff gewogen wird. Das Auslösesignal kann dann generiert werden, sobald ein Gewicht des ausgeschütteten Werkstoffs zumindest näherungsweise stationär bleibt, d.h. sich nicht mehr oder nicht mehr wesentlich ändert.

Darüber hinaus kann aus dem Bauteil fallender Werkstoff mittels eines optischen Sensors, insbesondere einer Kamera oder einer Lichtschranke detektiert werden. Das Auslösesignal kann generiert werden, sobald ein Detektionsergebnis einen vorgegebenen Schwellwert unterschreitet.

Zur Detektion des aus dem Bauteil fallenden Werkstoffs kann dieser mittels eines Lasers beleuchtet werden. Insbesondere kann ein schnell rotierender oder anderweitig bewegter Laserstrahl zur Beleuchtung des fallenden Werkstoffs in einer Ebene verwendet werden. Mehrere rotierende Laserstrahlen können zur Beleuchtung in unterschiedlichen Ebenen und mit unterschiedlichen Farben eingesetzt werden.

Ferner können Geräusche von aus dem Bauteil fallendem Werkstoff mittels eines akustischen Sensors detektiert werden. Das Auslösesignal kann generiert werden, sobald ein Detektionsergebnis einen vorgegebenen Schwellwert unterschreitet.

Darüber hinaus können Bewegungen des Werkstoffs innerhalb des Bauteils mittels eines Bewegungssensors detektiert werden. Das Auslösesignal kann generiert werden, sobald ein Detektionsergebnis einen vorgegebenen Schwellwert unterschreitet. Ein solcher Bewegungssensor kann beispielsweise ein Laserinterferometer oder ein Mikrosystem, insbesondere ein sog. MEMS (MicroElectroMechanical System) zur Detektion kleiner Bewegungen des Bauteils oder des darin befindlichen Werkstoffs umfassen. Die Detektion kann insbesondere über eine Frequenzdetektion erfolgen.

Gemäß einer weiteren vorteilhaften Ausführungsform der Erfindung kann nach Detektion des Abflauens der Werkstoffbewegung eine vorgegebene Zeitspanne gewartet werden, bevor das Bauteil in die nachfolgende Ausschüttpose bewegt wird. Hierdurch kann in vielen Fällen sichergestellt werden, dass auch eventuelle Restbewegungen des Werkstoffs, insbesondere im Innern des Bauteils zum Erliegen kommen. Die Zeitspanne kann absolut vorgegeben werden oder relativ zu einem posenspezifischen Zeitraum oder zu einem bereits verstrichenen Zeitraum.

Ein Ausführungsbeispiel der Erfindung wird nachfolgend anhand der Zeichnung näher erläutert. Dabei veranschaulichen jeweils in schematischer Darstellung:
Figur 1 eine erfindungsgemäße Anordnung,
Figur 2 eine Simulation eines Ausschüttvorgangs,
Figur 3 ein Ablaufdiagramm eines erfindungsgemäßen Verfahrens

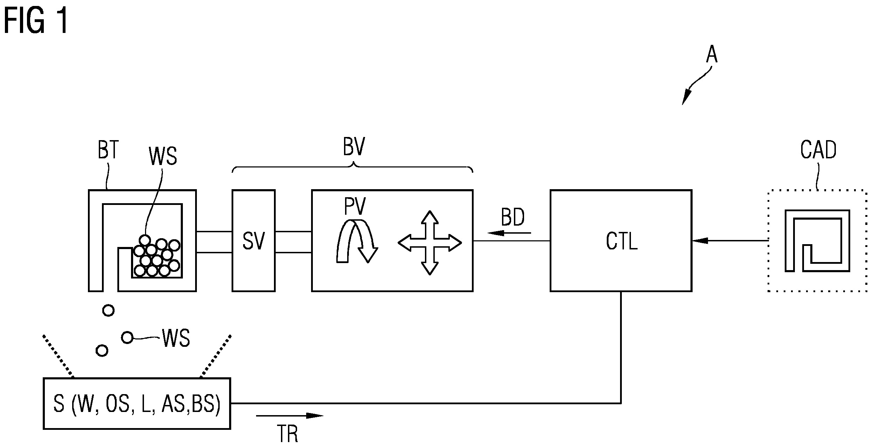

Figur 1 zeigt in schematischer Darstellung eine erfindungsgemäße Anordnung A zum Separieren überschüssigen Werkstoffs WS von einem additiv, d.h. mittels eines additiven Fertigungsverfahrens hergestellten Bauteil BT. Das Bauteil BT ist vorzugsweise durch einen 3D-Drucker im Pulverbettverfahren hergestellt, bei dem, wie einleitend dargestellt, einzelne Partikel eines pulverförmigen oder fluiden Werkstoffs Schicht für Schicht miteinander verbunden werden. Der bei der additiven Fertigung nicht verbundene und damit überschüssige Werkstoff WS ist entsprechend zu entfernen. Figur 1 zeigt das Bauteil BT nach Beendigung des schichtweisen Fertigungsprozesses, aber noch vor Entfernung des überschüssigen, nicht verbundenen Werkstoffs WS.

Die Anordnung A weist eine Schwingungsvorrichtung SV, eine Positioniervorrichtung PV, eine Steuerung CTL sowie eine Sensorik S auf.

Das Bauteil BT ist mit der Schwingungsvorrichtung SV mechanisch gekoppelt, die wiederum mit der Positioniervorrichtung PV mechanisch gekoppelt ist. Die Positioniervorrichtung PV, die vorzugsweise als Roboterarm ausgebildet ist, dient dazu, das Bauteil in unterschiedliche Posen zu versetzen. Eine Pose bezeichnet eine räumliche Lage des Bauteils und umfasst dessen Position und räumliche Orientierung oder Ausrichtung. Durch die Positioniervorrichtung PV kann das Bauteil also in unterschiedliche Positionen und räumliche Ausrichtungen bewegt werden.

Die Schwingungsvorrichtung SV dient dazu, das Bauteil BT in mechanische Schwingungen zu versetzen. Eine Amplitude, Frequenz und/oder Schwingungsrichtung der mechanischen Schwingungen ist hierbei vorzugsweise variierbar. Die Positioniervorrichtung PV kann das Bauteil BT gemeinsam mit der Schwingungsvorrichtung SV um eine oder mehrere Rotationsachsen rotieren und translatorisch verfahren. Vorzugsweise kann das Bauteil BT durch eine als Roboterarm ausgebildete Positioniervorrichtung PV einer 3D-Fertigungsumgebung, wie beispielsweise einem 3D-Drucker entnommen und an der Schwingungsvorrichtung SV fixiert werden. Die Positioniervorrichtung PV und die Schwingungsvorrichtung SV sind Teil einer Bewegungsvorrichtung BV zum Bewegen des Bauteils BT.

Die Sensorik S, die Positioniervorrichtung PV, die Schwingungsvorrichtung SV bzw. die Bewegungsvorrichtung BV sind mit der Steuerung CTL gekoppelt. Die Steuerung CTL dient zum Steuern der Bewegungsvorrichtung BV, d.h. zum Steuern der Positionierung und Ausrichtung des Bauteils BT durch die Positioniervorrichtung PV sowie zum Steuern der durch die Schwingungsvorrichtung SV zu bewirkenden Schwingungen.

Erfindungsgemäß wird die Bewegungsvorrichtung BV so gesteuert, dass das Bauteil BT nacheinander verschiedene Posen einnimmt, in denen der überschüssige Werkstoff WS möglichst schnell und/oder vollständig ausgeschüttet wird. Derartige vorteilhafte Ausschüttposen werden anhand einer Simulation eines oder mehrerer Ausschüttvorgänge ermittelt. Diese Simulation wird anhand eines volumetrischen Modells CAD des Bauteils BT durch die Steuerung CTL ausgeführt. Das volumetrische Modell CAD wird dabei durch räumlich aufgelöste Strukturdaten des Bauteils BT dargestellt, die zur Steuerung CTL übermittelt werden. Anhand dieser Simulation ermittelt die Steuerung CTL geeignete Bewegungsdaten BD zum Ansteuern der Positioniervorrichtung PV und der Schwingungsvorrichtung SV bzw. der Bewegungsvorrichtung BV. Durch die Bewegungsdaten BD werden vom Bauteil BT einzunehmende Ausschüttposen sowie Frequenz, Amplitude und/oder Schwingungsrichtungen von Schwingungen quantifiziert. Eine jeweilige Ausschüttpose des Bauteils BT kann vorzugsweise durch eine eine Position des Bauteils BT quantifizierende Positionsangabe zusammen mit einer eine räumliche Orientierung oder Ausrichtung des Bauteils BT quantifizierenden Winkelangabe spezifiziert werden. Als Winkelangaben können insbesondere Raumwinkel oder Eulerwinkel verwendet werden.

Die Bewegungsvorrichtung BV empfängt die Bewegungsdaten BD von der Steuerung CTL und wird durch die Bewegungsdaten BD gesteuert. Auf diese Weise wird die Positioniervorrichtung PV dazu veranlasst, das Bauteil BT in eine Ausschüttpose zu bewegen, in der der überschüssige Werkstoff WS möglichst schnell und effektiv ausgeschüttet wird. Darüber hinaus wird die Schwingungsvorrichtung SV dazu veranlasst, das Bauteil BT derart in mechanische Schwingungen zu versetzen, dass der Ausschüttvorgang nach Möglichkeit beschleunigt wird. Der Werkstoff WS wird hierbei gewissermaßen aus dem Bauteil BT herausgeschüttelt.

Ein während des Ausschüttvorgangs ausgeschütteter oder aus dem Bauteil BT fallender Werkstoff WS wird durch die Sensorik S detektiert. Die Sensorik S dient insbesondere dazu, eine durch den Ausschüttvorgang bedingte Bewegung des Werkstoffs WS und speziell ein Abflauen dieser Bewegung zu detektieren. Zu diesem Zweck kann die Sensorik S unterschiedliche Sensoren aufweisen. So kann insbesondere eine Waage W vorgesehen sein, durch die der aus dem Bauteil BT ausgeschüttete Werkstoff WS fortlaufend gewogen wird. Anstelle oder zusätzlich zur Waage W kann auch ein anderer Mengensensor zur Erfassung des ausgeschütteten Werkstoffs WS vorgesehen sein. Weiterhin kann zur Detektion des ausgeschütteten Werkstoffs WS ein optischer Sensor OS, beispielsweise eine Kamera oder eine Lichtschranke, verwendet werden, vorzugsweise zusammen mit einem Laser L zur Beleuchtung des ausgeschütteten Werkstoffs WS. Ferner können Geräusche des aus dem Bauteil BT fallendem Werkstoffs WS oder des sich im Bauteil BT bewegenden Werkstoffs WS mittels eines akustischen Sensors AS detektiert werden. Darüber hinaus können Bewegungen des Werkstoffs WS innerhalb des Bauteils BT mittels eines Bewegungssensors BS, z.B. mittels eines Laserinterferometers oder eines sog. MEMS (MicroElectroMechanical System) detektiert werden.

Sobald mittels der Sensorik S festgestellt wird, dass keine merkliche Werkstoffbewegung mehr stattfindet, kann in der Regel davon ausgegangen werden, dass auch die Bewegungen des Werkstoff WS im Inneren des Bauteils BT abgeklungen sind. Sobald dieser Zustand eintritt, kommen die Entleerung des Bauteils und auch eventuelle Ümschüttvorgänge im Inneren des Bauteils BT für die aktuelle Pose zum Erliegen. Insofern viele Simulationen die Dauer von Ausschüttvorgängen überschätzen, erweist es sich als sehr vorteilhaft, das Bauteil unmittelbar nach der Detektion des Abflauens der Werkstoffbewegung in die nächste Auschüttpose zu bringen, ohne eine durch die Simulation ermittelte Zeitdauer abzuwarten.

Dementsprechend wird von der Sensorik S infolge der Detektion des Abflauens der Werkstoffbewegung ein Auslösesignal TR generiert und zur Steuerung CTL übermittelt. Das Auslösesignal TR kann insbesondere dann generiert werden, sobald ein durch die Waage W gemessenes Gewicht des ausgeschütteten Werkstoffs WS zumindest näherungsweise stationär bleibt, d.h. sich nicht mehr oder nicht mehr wesentlich ändert. Im Falle der anderen Sensoren OS, AS und BS kann das Auslösesignal TR generiert werden, sobald ein Detektionsergebnis einen vorgegebenen Schwellwert unterschreitet.

Infolge des Empfangs des Auslösesignals TR wird die Bewegungsvorrichtung BV durch die Steuerung CTL dazu veranlasst, das Bauteil BT in die nächste Ausschüttpose zu bewegen.

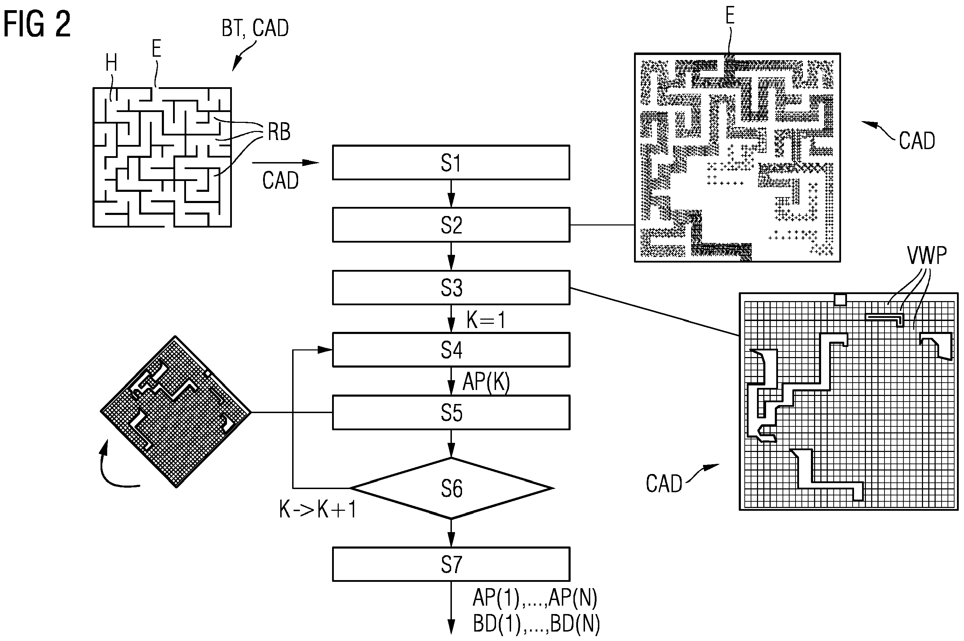

Figur 2 veranschaulicht eine Simulation eines Ausschüttvorgangs von überschüssigem Werkstoff WS aus dem Bauteil BT. Insofern in Figur 2 die gleichen oder korrespondierende Bezugszeichen verwendet werden wie in Figur 1, werden hierdurch die gleichen oder korrespondierende Entitäten bezeichnet, die vorzugsweise wie oben beschrieben implementiert oder realisiert sind.

Zur Simulation des Ausschüttvorgangs werden Verfahrensschritte S1 bis S7 vorzugsweise durch die Steuerung CTL ausgeführt.

In Verfahrensschritt S1 wird ein volumetrisches Modell CAD des Bauteils BT in Form von räumlich aufgelösten Strukturdaten des Bauteils BT von der Steuerung CTL eingelesen. Das volumetrische Modell CAD kann insbesondere als sogenanntes CAD-Modell (CAD: Computer Aided Design) vorliegen. Anhand des volumetrischen Modells CAD wird ein Hohlraum H des Bauteils BT ermittelt, der nach der additiven Fertigung des Bauteils BT mit überschüssigem Werkstoff WS gefüllt ist und über eine Öffnung E des Bauteils BT zu entleeren ist.

Der Hohlraum H wird zur Simulation des Ausschüttvorgangs in eine Vielzahl von räumlichen Bereichen RB eingeteilt. Zu diesem Zweck kann vorzugsweise ein virtuelles räumliches Gitter über das Bauteil BT oder über den Hohlraum H gelegt werden. Die räumlichen Bereiche RB werden dann durch die im Hohlraum H befindlichen oder mit diesem überlappenden Gitterzellen dargestellt. Aus Übersichtlichkeitsgründen sind in Figur 2 nur wenige dieser räumlichen Bereiche RB explizit dargestellt.

Im Verfahrensschritt S2 werden anhand des volumetrischen Modells CAD für einen jeweiligen räumlichen Bereich RB jeweils eine Weglänge eines im Hohlraum H verlaufenden Wegs zur Öffnung E ermittelt. Die jeweiligen Weglängen sind im rechten oberen Teil von Figur 2 schattiert dargestellt, wobei dunklere Bereiche näher an der Öffnung E angeordnet sind als hellere Bereiche. Vorteilhafterweise können die Weglängen mit Hilfe eines sogenanntes Fast-Marching-Verfahrens ermittelt werden, durch das für jeden räumlichen Bereich RB jeweils ein kürzester Weg von diesem räumlichen Bereich zur Öffnung E ermittelt wird. Gemäß des Fast-Marching-Verfahrens können die kürzesten Wege und deren Weglängen ermittelt werden, indem eine virtuelle, von der Öffnung E ausgehende Wellenausbreitung betrachtet und für jeden der räumlichen Bereiche RB eine Ankunftszeit ermittelt wird. Die Ankunftszeiten entsprechen dann den zu ermittelnden Weglängen.

Weiterhin wird für einen jeweiligen Bereich RB eine jeweilige lokale Schüttrichtung ermittelt, in der sich die lokale Weglänge am meisten verkürzt. Diese Schüttrichtung wird vorzugsweise als negativer Gradient eines Weglängenfeldes ermittelt. Die jeweils ermittelte Weglänge und Schüttrichtung wird dem jeweiligen räumlichen Bereich zugeordnet.

Im Verfahrensschritt S3 wird der Hohlraum H anhand des volumetrischen Modells CAD simulativ mit virtuellen Werkstoffpartikeln VWP vollständig oder teilweise gefüllt. Hierbei kann ein virtueller Werkstoffpartikel VWP in einer Simulation stellvertretend für eine Vielzahl realer Werkstoffpartikel stehen. Bei Verwendung anderer Simulationen kann eine Füllung mit virtuellem Werkstoff entsprechend anders realisiert werden.

Weiterhin wird ein Zähler K für die zu ermittelnden Ausschüttposen zu K=1 initialisiert.

Im Verfahrensschritt S4 wird eine für einen aktuellen Füllzustand des Bauteils BT mit virtuellen Werkstoffpartikeln VWP vorteilhafte Ausschüttpose AP(K) sowie eine geeignete Schwingung des Bauteils BT ermittelt. Die Wahl der aktuellen Ausschüttpose AP(K) bestimmt den Entleerungsprozess, bei dem die Schwerkraft eine treibende Kraft ist und durch das Schütteln des Bauteils BT unterstützt wird. Die Wahl der Ausschüttpose AP(K) basiert auf einer Analyse des aktuellen Füllzustandes des Bauteils BT sowie der ermittelten Weglängen und Schüttrichtungen.

Um eine vorteilhafte Ausschüttpose AP(K) zu ermitteln, werden die räumlichen Bereiche RB nach einem aktuell mit vielen, insbesondere möglichst vielen virtuellen Werkstoffpartikeln VWP gefüllten räumlichen Bereich durchsucht, dem eine kurze, insbesondere möglichst kurze Weglänge zur Öffnung E zugeordnet ist. Gegebenenfalls kann für einen jeweiligen räumlichen Bereich RB ein Schüttparameter ermittelt werden, in dem eine aktuell darin enthaltene Menge an virtuellen Werkstoffpartikeln VWP mit der zugeordneten Weglänge, z.B. in Form einer gewichteten Summe verrechnet wird. Vorzugsweise wird ein solcher Schüttparameter durch eine kürzere Weglänge sowie durch eine größere Anzahl von aktuell enthaltenen virtuellen Werkstoffpartikeln VWP erhöht und andernfalls verringert. In diesem Fall kann aus den räumlichen Bereichen RB ein räumlicher Bereich selektiert werden, der den höchsten Schüttparameter aufweist.

Anschließend wird eine dem gefundenen oder selektierten räumlichen Bereich zugeordnete Schüttrichtung ermittelt. Anhand der ermittelten Schüttrichtung wird eine Ausschüttpose AP(K) festgelegt, durch die das Bauteil BT so ausgerichtet würde, dass die ermittelte Schüttrichtung in Schwerkraftrichtung nach unten weist.

Weiterhin werden Bewegungsdaten bestimmt, die die ermittelte Ausschüttpose AP(K) quantifizieren. Darüber hinaus werden weitere Bewegungsdaten ermittelt, durch die das Bauteil BT in den Ausschüttvorgang beschleunigende Schwingungen versetzt würde. Die weiteren Bewegungsdaten können insbesondere Amplitude, Frequenz sowie Schwingungsrichtung dieser Schwingungen spezifizieren. Die ermittelten Bewegungsdaten werden in einem Datensatz BD(K) zusammengefasst, die einen spezifischen Bewegungsschritt für das Bauteil BT quantifizieren.

Im Verfahrensschritt S5 wird der durch diesen Bewegungsschritt spezifisch induzierte Ausschüttvorgang von virtuellen Werkstoffpartikeln VWP aus der Öffnung E des Bauteils BT physikalisch simuliert. Ein hierfür zu verwendendes Simulationsmodell kann anhand des volumetrischen Modells CAD implementiert oder initialisiert werden.

Im Rahmen der Simulation wird das Bauteil BT anhand der im Verfahrensschritt S4 ermittelten Bewegungsdaten BD(K) virtuell in die Ausschüttpose AP(K) gebracht und in Schwingungen versetzt. Insbesondere wird hierbei eine bewegungsbedingte Verteilung der virtuellen Werkstoffpartikel VWP im Bauteil BT simuliert. Wie oben bereits erwähnt, wird der Ausschüttvorgang durch die Schwerkraft angetrieben und durch die Schwingungen unterstützt. Durch die Schwingungen kann das Werkstoffpulver in vielen Fällen effektiv "fluidisiert" werden oder eine Viskosität eines Werkstofffluids verringert werden, wodurch eine simulationstechnische Behandlung häufig erheblich vereinfacht wird. Vorzugsweise wird die Bewegung der virtuellen Werkstoffpartikel VWP mittels einer Partikelsimulation berechnet. Derartige Partikelsimulationsverfahren können insbesondere auf Grafikprozessoren effizient berechnet werden.

Als Ergebnis der Simulation des spezifischen Bewegungsschritts, d.h. des spezifischen Ausschüttvorgangs in der Ausschüttpose AP(K) wird ein hieraus resultierender zeitlicher Verlauf einer Verteilung der virtuellen Werkstoffpartikel VWP im Bauteil BT ermittelt. Insbesondere wird ein resultierender zeitlicher Verlauf eines Füllgrads des Bauteils BT mit virtuellen Werkstoffpartikeln VWP ermittelt. Die aktuelle Ausschüttpose AP(K), der resultierende Verlauf der Verteilung der virtuellen Werkstoffpartikel VWP sowie der resultierende Füllgradverlauf werden dem jeweiligen Bewegungsschritt zugeordnet.

Im Verfahrensschritt S6 wird geprüft, ob der Hohlraum H virtuell entleert ist. Hierzu kann ein Zielwert für die Entleerung vorgegeben sein, z.B. ein Restfüllgrad, bei dessen Unterschreitung das Bauteil BT als entleert oder gebrauchsfertig gilt. Sofern der Hohlraum H nicht entleert ist, wird der Zähler K inkrementiert, und es erfolgt ein Rücksprung zum Verfahrensschritt S4, in dem die nächste Ausschüttpose AP(K+1) ermittelt wird. Andernfalls wird der Verfahrensschritt S7 ausgeführt.

Im Verfahrensschritt S7 werden die Simulationsergebnisse dokumentiert und eine darauf basierende Steuerdatei generiert. Die Steuerdatei enthält eine Abfolge der ermittelten Ausschüttposen AP(1), ..., AP(N), zugehörige Bewegungsdaten BD(1),..., BD(N) zum Ansteuern der Bewegungsvorrichtung BV sowie weitere Simulationsergebnisse. Im vorliegenden Ausführungsbeispiel enthält die Steuerdatei für einen K-ten simulierten Bewegungsschritt die zugehörige Ausschüttpose AP(K), die den Bewegungsschritt spezifizierenden Bewegungsdaten BD(K) sowie den aus dem Bewegungsschritt resultierenden Verlauf der Verteilung der virtuellen Werkstoffpartikel VWP im Bauteil BT.

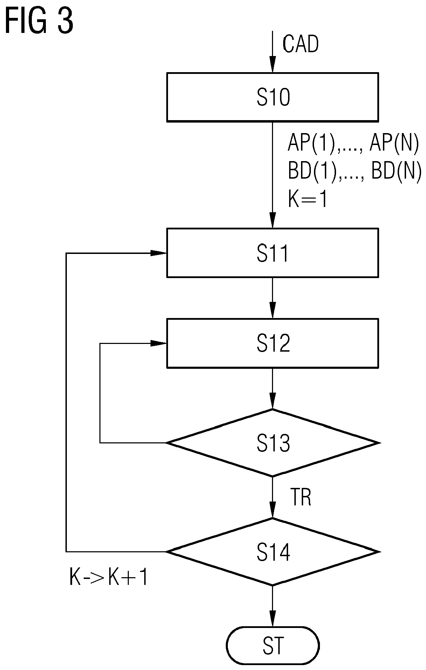

Figur 3 zeigt ein Ablaufdiagramm eines erfindungsgemäßen Verfahrens zum Separieren von überschüssigem Werkstoff WS vom Bauteil BT. Insofern in Figur 3 die gleichen oder korrespondierende Bezugszeichen verwendet werden wie in den vorangegangenen Figuren, werden hierdurch die gleichen oder korrespondierende Entitäten bezeichnet, die vorzugsweise wie oben beschrieben implementiert oder realisiert sind.

Das erfindungsgemäße Verfahren wird vorzugsweise durch die Steuerung CTL ausgeführt, die zur Ausführung insbesondere über einen oder mehrere Prozessoren, Computer, anwendungsspezifische integrierte Schaltungen (ASIC), digitale Signalprozessoren (DSP) und/oder sogenannte "Field Programmable Gate Arrays" (FPGA) verfügen kann.

In einem initialen Verfahrensschritt S10 wird anhand des volumetrischen Modells CAD ein Ausschüttvorgang, wie im Zusammenhang mit Figur 2 beschrieben, durch die Verfahrensschritte S1 bis S7 simuliert. Als Ergebnis der Simulation wird, wie oben beschrieben, eine Steuerdatei generiert, die die Abfolge der ermittelten Ausschüttposen AP(1),..., AP(N), die zugehörigen Bewegungsdaten BD(1),..., BD(N) zum Ansteuern der Bewegungsvorrichtung BV sowie für eine jeweilige Ausschüttpose AP(K) den daraus resultierenden zeitlichen Verlauf der Verteilung der virtuellen Werkstoffpartikel VWP im Bauteil BT enthält. Die Simulation kann vorzugsweise vorab oder offline durchgeführt werden.

Vor Ausführung eines nächsten Verfahrensschritts S11 wird der Zähler K für die Ausschüttposen zu K=1 initialisiert.

Im Verfahrensschritt S11 wird die Bewegungsvorrichtung BV anhand der Bewegungsdaten BD(K) dazu veranlasst, das Bauteil BT in die Ausschüttpose AP(K) zu bewegen und in Schwingungen zu versetzen. Die Bewegung des Bauteils BT bzw. deren zeitlicher Verlauf orientiert sich hierbei am zeitlichen Verlauf der simulierten Werkstoffverteilung.

In einem weiteren Verfahrensschritt S12 wird der in der Ausschüttpose AP(K) aus dem Bauteil BT ausgeschüttete Werkstoff WS - wie im Zusammenhang mit Figur 1 erläutert - durch die Sensorik S fortlaufend detektiert. Hierbei wird insbesondere eine Bewegung des ausgeschütteten Werkstoffs WS detektiert.

In einem darauf bezogenen Verfahrensschritt S13 wird geprüft, ob die detektierte Werkstoffbewegung abflaut, d.h. signifikant schwächer wird oder zum Erliegen kommt. Sobald festgestellt wird, dass keine merkliche Werkstoffbewegung mehr stattfindet, wird - wie im Zusammenhang mit Figur 1 beschrieben - ein Auslösesignal TR generiert und zur Steuerung CTL übertragen. Durch das Auslösesignal TR wird die Steuerung CTL dazu veranlasst, eine Entleerungsprüfung S14 vorzunehmen und ggf. zum Verfahrensschritt S11 zurückzuspringen. Falls kein Abflauen der Werkstoffbewegung detektiert wird, erfolgt dagegen ein Rücksprung zum Verfahrensschritt S12.

Im Rahmen der Entleerungsprüfung S14 wird geprüft, ob das Bauteil BT bereits entleert ist. Diese Prüfung kann insbesondere dadurch erfolgen, dass ein Gewicht des ausgeschütteten Werkstoffs WS mit einem Gewicht des ursprünglich im Bauteil BT befindlichen Werkstoffs WS verglichen wird. Letzteres kann z.B. anhand des volumetrischen Modells CAD ermittelt werden. Falls die Prüfung ergibt, dass das Bauteil BT entleert ist, wird die erfindungsgemäße Separation erfolgreich beendet und gelangt in einen Zielzustand ST.

Falls die Prüfung dagegen ergibt, dass das Bauteil BT noch nicht entleert ist, wird der Zähler K inkrementiert, und es erfolgt ein Rücksprung zum Verfahrensschritt S11, in dem das Bauteil BT in die nächste Ausschüttpose AP(K+1) bewegt wird. Gegebenenfalls kann vor Beginn der Bewegung in die nächste Ausschüttpose AP(K) eine vorgegebene Zeitspanne gewartet werden, um sicherzustellen oder eine Wahrscheinlichkeit dafür zu erhöhen, dass auch eventuelle Restbewegungen des Werkstoffs WS im Innern des Bauteils BT zum Erliegen kommen.

Wie oben bereits erwähnt, wird der Rücksprung zum Verfahrensschritt S11 durch das Auslösesignal TR veranlasst. Dabei wird das Auslösesignal TR vorrangig vor dem zeitlichen Verlauf der simulierten Werkstoffverteilung berücksichtigt. Insbesondere wird nicht eine durch die Simulation ermittelte Zeitdauer bis zum Abklingen der Werkstoffbewegung in der Ausschüttpose AP(K) abgewartet, sondern es wird auf das tatsächlich gemessene Abflauen der Werkstoffbewegung abgestellt. D.h. in Abweichung von der simulationsgetriebenen Ansteuerung der Bewegungsvorrichtung BV durch die Steuerung CTL wird die Bewegung in die nächste Ausschüttpose AP(K+1) veranlasst, sobald mittels der Sensorik S festgestellt wird, dass keine merkliche Werkstoffbewegung mehr stattfindet. Insofern die Abklingzeit durch Simulationen häufig überschätzt wird, kann so der Auschüttvorgang in der Regel erheblich beschleunigt werden.

Durch die Simulation des Ausschüttvorgangs und die darauf basierende Bewegung des Bauteils in optimierte Ausschüttposen kann der überschüssige Werkstoff in der Regel sehr effektiv vom Bauteil separiert werden. Insbesondere können durch die vorrangig ausgelöste Bewegung in die nächste Ausschüttpose Verzögerungen vermieden werden, die auf einer simulationsbedingten Überschätzung der Ausschüttdauer basieren. Es erweist sich, dass die Entleerungsdauer für das Bauteil durch die Erfindung in vielen Fällen erheblich reduziert werden kann.

## Patentansprüche

1. Verfahren zum Separieren überschüssigen Werkstoffs (WS) von einem additiv hergestellten Bauteil (BT), wobei
a) räumlich aufgelöste Strukturdaten (CAD) des Bauteils (BT) empfangen werden,
b) anhand der Strukturdaten (CAD) ein Ausschüttvorgang von Werkstoff (WS) aus dem Bauteil (BT) simuliert wird, wobei eine Abfolge von Ausschüttposen (AP(1),...,AP(N)) des Bauteils (BT) ermittelt wird, und
c) für eine jeweilige Ausschüttpose (AP(K)):
- das Bauteil (BT) abhängig vom simulierten Ausschüttvorgang in die jeweilige Ausschüttpose (AP(K)) bewegt wird,
- eine Werkstoffbewegung sensorisch detektiert wird,
- infolge einer Detektion eines Abflauens der Werkstoffbewegung ein Auslösesignal (TR) generiert wird, und
- durch das Auslösesignal (TR) eine Bewegung des Bauteils (BT) in eine nachfolgende Ausschüttpose (AP(K+1)) veranlasst wird, wobei das Auslösesignal (TR) vorrangig vor dem simulierten Ausschüttvorgang berücksichtigt wird.

2. Verfahren nach Anspruch 1, **dadurch gekennzeichnet,**
**dass** anhand der Strukturdaten (CAD) ein Hohlraum (H) des Bauteils (BT) ermittelt und in räumliche Bereiche (RB) eingeteilt wird,
**dass** für einen jeweiligen räumlichen Bereich (RB) eine Weglänge eines im Hohlraum (H) verlaufenden Wegs zu einer Öffnung (E) des Hohlraums (H) sowie eine Schüttrichtung (SR), in der sich diese Weglänge verkürzt, ermittelt und dem jeweiligen räumlichen Bereich (RB) zugeordnet wird, und
**dass** aus den ermittelten Schüttrichtungen (SR) die Abfolge von Ausschüttposen (AP(1),...,AP(N)) abgeleitet wird.

3. Verfahren nach Anspruch 2, **dadurch gekennzeichnet,**
**dass** eine kürzeste Weglänge eines jeweiligen räumlichen Bereichs (RB) zur Öffnung (E) mittels eines Fast-Marching-Verfahrens ermittelt wird.

4. Verfahren nach Anspruch 2 oder 3, **dadurch gekennzeichnet, dass**
der Hohlraum (H) des Bauteils (BT) simulativ mit virtuellem Werkstoff (VWP) gefüllt wird,
dass ein räumlicher Bereich (RB) selektiert wird, der eine kürzere Weglänge zur Öffnung (E) aufweist und/oder mit mehr virtuellem Werkstoff (VWP) gefüllt ist als andere räumliche Bereiche,
dass eine dem selektierten räumlichen Bereich (RB) zugeordnete Schüttrichtung (SR) ermittelt wird, und
dass aus der ermittelten Schüttrichtung (SR) eine Ausschüttpose (AP(K)) abgeleitet wird.

5. Verfahren nach einem der vorhergehenden Ansprüche, **dadurch gekennzeichnet,**
**dass** im Rahmen der Simulation des Ausschüttvorgangs eine bewegungsbedingte Verteilung von virtuellem Werkstoff (VWP) im Bauteil (BT) simuliert wird.

6. Verfahren nach einem der vorhergehenden Ansprüche, **dadurch gekennzeichnet, dass**
das Bauteil (BT) durch eine Bewegungsvorrichtung (BV) in unterschiedliche räumliche Ausrichtungen rotiert und/oder in mechanische Schwingungen versetzt wird.

7. Verfahren nach einem der vorhergehenden Ansprüche, **dadurch gekennzeichnet,**
**dass** die Werkstoffbewegung mittels einer Waage (W) detektiert wird, durch die aus dem Bauteil (BT) ausgeschütteter Werkstoff (WS) gewogen wird, und
**dass** das Auslösesignal (TR) generiert wird, sobald ein Gewicht des ausgeschütteten Werkstoffs (WS) zumindest näherungsweise stationär bleibt.

8. Verfahren nach einem der vorhergehenden Ansprüche, **dadurch gekennzeichnet,**
**dass** aus dem Bauteil (BT) fallender Werkstoff (WS) mittels eines optischen Sensors (OS) detektiert wird, und
**dass** das Auslösesignal (TR) generiert wird, sobald ein Detektionsergebnis einen vorgegebenen Schwellwert unterschreitet.

9. Verfahren nach Anspruch 8, **dadurch gekennzeichnet,**
**dass** zur Detektion des aus dem Bauteil (BT) fallenden Werkstoffs (WS), dieser mittels eines Lasers (L) beleuchtet wird.

10. Verfahren nach einem der vorhergehenden Ansprüche, **dadurch gekennzeichnet,**
**dass** Geräusche von aus dem Bauteil (BT) fallendem Werkstoff (WS) mittels eines akustischen Sensors (AS) detektiert werden, und
**dass** das Auslösesignal (TR) generiert wird, sobald ein Detektionsergebnis einen vorgegebenen Schwellwert unterschreitet.

11. Verfahren nach einem der vorhergehenden Ansprüche, **dadurch gekennzeichnet,**
**dass** Bewegungen des Werkstoffs (WS) innerhalb des Bauteils (BT) mittels eines Bewegungssensors (BS) detektiert werden, und
**dass** das Auslösesignal (TR) generiert wird, sobald ein Detektionsergebnis einen vorgegebenen Schwellwert unterschreitet.

12. Verfahren nach einem der vorhergehenden Ansprüche, **dadurch gekennzeichnet,**
**dass** nach Detektion des Abflauens der Werkstoffbewegung eine vorgegebene Zeitspanne (T) gewartet wird, bevor das Bauteil (BT) in die nachfolgende Ausschüttpose (AP(K+1)) bewegt wird.

13. Anordnung (A) zum Separieren eines Werkstoffs (WS) von einem additiv hergestellten Bauteil (BT), eingerichtet zum Ausführen eines Verfahrens nach einem der vorhergehenden Ansprüche, mit
einer Bewegungsvorrichtung (BV) zum Bewegen des Bauteils (BT) in eine jeweilige Ausschüttpose (AP(K)) und einer Sensorik (S) zum Detektieren einer Werkstoffbewegung.
